# EUROPÄISCHE PATENTSCHRIFT

(11) **EP 0 867 705 B1**
(45) Veröffentlichungstag und Bekanntmachung des Hinweises auf die Patenterteilung: **25.06.2003**
(21) Anmeldenummer: 98890029.6
(22) Anmeldetag: 11.02.1998
(51) Int. Cl.: G01L 9/00, G01L 23/24

(54) **Sensor zur Erfassung von Oberflächendehnungen eines Hohlkörpers**
Sensor for measuring the surface strain of a hollow body
Capteur de mesure des déformations à la surface d'un corps creux

(30) Priorität: 07.03.1997 AT 14697
(43) Veröffentlichungstag der Anmeldung: 30.09.1998
(73) Patentinhaber: AVL List GmbH, 8020 Graz (AT)
(72) Erfinder: Harms, Klaus-Christoph, Dr., 8051 Graz (AT); Kirschbaum, Paul, 8054 Seiersberg (AT); Glaser, Josef, Dr., 8047 Graz (AT)
(74) Vertreter: Pinter, Rudolf, Dipl.-Ing.

(56) Entgegenhaltungen:
- DE-A- 2 647 402
- DE-A- 2 747 949
- DE-A- 4 002 790
- US-A- 4 731 556

## Beschreibung

Die Erfindung betrifft einen Sensor zur bereichsweisen Erfassung der Dehnung der äußeren Oberfläche eines Hohlkörpers, insbesonders zur Messung des Innendruckes von Einspritzleitungen von Dieselbrennkraftmaschinen, mit zumindest einem mittels eines im wesentlichen radial wirkenden Stützelementes im wesentlichen gleichmäßig elastisch an die Oberfläch des zu messenden Hohlkörpers anpreßbaren elektrischen Meßelement und einer für die reibschlüssige Verbindung zwischen Oberfläche und Meßelement angeordneten Schutzfolie.

Verwendet werden derartige Sensoren vor allem zur Prüfung und Diagnose von Dieselmotoren mit konventionellem Einspritzsystem. Diese Brennkraftmaschinen besitzen häufig keine elektrischen Einrichtungen, mit denen eine einfache und rasche Bestimmung z.B. der Drehzahl, des Förderbeginns und des für die Erkennung von Fehlern im Einspritzsystem, die häufig unzulässig schlechte Abgaswerte zur Folge haben, wichtigen Einspritzdruckverlaufes möglich wäre. Daher besteht ein Bedarf an preiswerten, robusten und ausreichend genauen Sensoren, die einfach und rasch an der Brennkraftmaschine angebracht werden können und solche Messungen erlauben.

Für diese Aufgabe prinzipiell geeignete Sensoren mit unterschiedlichen Merkmalen sind beispielsweise aus den folgenden Patentschriften bekannt geworden: AT-PS 375.466, AT-PS 353.507, AT-PS 373.393, AT-PS 373.394, AT-PS 374.007, AT-PS 374.280. Weiters ist beispielsweise die DE 40 02 790 C2 bekanntgeworden, die auch Bezug auf einige der oben genannten Schriften nimmt.

Allen derartigen bekannten Sensoren ist gemeinsam, daß sie aufgrund ihres Aufbaus und der verwendeten Teile relativ teuer sind. Weiters ist die für die reibschlüssige Verbindung zwischen Rohr und Meßelement eingesetzte dünne metallische Schutzfolie äußerst verletzlich, sodaß eine Einspritzleitung im Allgemeinen vor dem Aufklemmen des Sensors abgeschmirgelt werden muß: Einerseits sind Grate und Schmutz zu entfernen, und andererseits muß auch eine eventuell vorhandene Schutz- oder Lackschicht entfernt werden, da diese nicht nur eine für die Anwendung der bekannten Sensoren unzulässige Vergrößerung des Leitungsdurchmessers bewirkt, sondern auch den erforderlichen elektrischen Kontakt des Sensors zur Motormasse verhindert.

DE-A-27 47 949 beschreibt einen Sensor zur Erfassung des Druckverlaufs in einer Einspritzleitung. Der Sensor hat ein starres, zylinderförmiges Gehäuse, welches die Einspritzleitung umschließt und in dem ein induktiver Abstandssensor als Messelement vorgesehen ist. Eine Schutzschicht aus Kunststoff mit geringem E-Modul, die dicker ist als zu erwartende Fremdpartikel auf der Einspritzleitung, ist zwischen dem Messelement und der Leitungsoberfläche angebracht. Eine durch Druckveränderung hervorgerufene Durchmesseränderung des Rohres wird vom Messelement als Abstandsänderung zur Leitungsoberfläche registriert. Bei dieser Anordnung besteht keine reibschlüssige Verbindung zwischen der Oberfläche der Einspritzleitung und dem Messelement.

Aufgabe der Erfindung ist es, die angesprochenen Nachteile der bekannten Sensoren zu vermeiden und einen Sensor der eingangs genannten Art anzugeben, der einfach und robust ist, auch an lackierten Leitungen verwendet werden kann, und der vor allem auch bauartbedingt trotz beibehaltener guter Meßeigenschaften preiswert ist.

Diese Aufgabe wird gemäß der vorliegenden Erfindung dadurch gelöst, daß die Schutzfolie eine Dicke größer/gleich der radialen Abmessung von zu erwartenden Fremdkörpern, Verunreinigungen oder dergleichen auf der Oberfläche des zu messenden Hohlkörpers aufweist und aus Kunststoff mit geringem E-Modul besteht. Die Meßqualität und die Robustheit des Sensors hängt, wie sich herausgestellt hat, ganz wesentlich von der Schutzfolie ab. Diese Schutzfolie muß einerseits durch Reibschluß die Verbindung vom Rohr zum Meßelement herstellen, sodaß die Rohrdeformation vom Meßelement erfaßt werden kann, und andererseits muß die Schutzfolie das Meßelement vor Verletzungen, wie sie etwa durch Grate des Stahlrohres oder durch Schmutz und Partikel auf der Rohroberfläche entstehen können, schützen. Bei den bekannten Sensoren werden dafür sehr dünne metallische Folien eingesetzt, die bei den üblichen einpoligen Ausführungen auch den elektrischen Kontakt zum Massepotential beispielsweise des Motors herstellen. Man ging dabei davon aus, daß diese, eine relativ harte Oberfläche aufweisenden Folien mit einem E-Modul von z.B. 135.000 N/mm² einen guten Kompromiß zwischen Härte und Reibschluß einerseits und Dicke andererseits darstellen, und nahm in Kauf, daß diese Schutzfolien nicht selten von scharfen Fremdkörpern durchstoßen wurden, die so den Sensor zerstörten.

Die vorliegende Erfindung geht nun im wesentlichen davon aus, daß relativ weiche Schutzfolien mit größerer Dicke, die gegebenenfalls ein gefahrloses Einlagern bzw. Einbetten von Fremdkörpern, Verunreinigungen oder dergleichen ermöglichen, dann bevorzugt mit derartigen Sensoren verwendet werden können, wenn über einen relativ geringen E-Modul trotzdem sichergestellt bleibt, daß die Oberflächendehnungen des Hohlkörpers in noch ausreichendem Maße zur Gewinnung eines Meßsignals auf das eigentliche Meßelement übertragen werden können. Dabei hat sich erstaunlicherweise gezeigt, daß Schutzfolien aus prinzipiell deutlich verletzlicherem Kunststoff, die aber des geringeren E-Moduls von z.B. 4.000 N/mm² wegen z.B. 20-fach so dick sein können, einen viel besseren Schutz bei gleichbleibend guter Meßqualität bieten können. Geeignete Kunststoffe haben üblicherweise einen E-Modul im Bereich von etwa 1000 - 8000 N/mm².

In bevorzugter Ausgestaltung der Erfindung weist die Schutzfolie eine Dicke von bis zu 10 % des Hohlkörperdurchmessers auf. Dieser erstaunlich hohe Wert bietet einen soliden Schutz vor Verletzung des Meßelements und eine noch gute Meßqualität.

Zur Messung an Einspritzleitungen mit Außendurchmessern im Bereich von 4 bis 6 mm hat sich eine weitere Ausgestaltung der Erfindung ausgezeichnet bewährt, gemäß welcher die Schutzfolie aus Polyamid mit einer Foliendicke im Bereich von etwa 0,2 bis 0,3 mm und einem E-Modul im Bereich von etwa 4000 N/mm² besteht. Derartige Folien sind einfach und kostengünstig zu beschaffen und sichern im normalen Betrieb derartiger Sensoren ausgezeichnete Meßergebnisse bei gleichzeitig stark herabgesetzter Empfindlichkeit gegenüber Fremdkörpern und dergleichen auf dem zu messenden Hohlkörper.

Die Schutzfolie kann gemäß einer weiteren bevorzugten Ausgestaltung der Erfindung das Meßelement bis auf dessen herausgeführte elektrische Kontaktierungen allseits in Form einer geschlossenen Kapsel dicht umgeben, was den Aufbau eines robusten Sensors und beispielsweise auch den einfachen Austausch eines beschädigten Meßelementes ermöglicht. Die elektrischen Kontaktierungen können dabei auf flexiblen Printfolien oder dergleichen angeordnet sein, die bevorzugt beispielsweise auch zur elektrischen Verbindung von zwei im Betrieb des Sensors zusammenwirkenden Gehäusehälften bzw. deren Meßelementen ausgebildet sein können.

Für mache Anwendungen als vorteilhaft herausgestellt hat sich eine weitere Ausgestaltung der Erfindung, gemäß welcher zusätzlich auch das Stützelement innerhalb der Schutzfolien-Kapsel angeordnet ist. Auch diese Maßnahme macht den Sensor robuster und weniger anfällig für Beschädigungen im Betrieb - der Austausch eines beispielsweise kaputten Meßelementes zusammen mit seinem Stützelement sichert darüberhinaus gleichbleibende Anpressverhältnisse für das Meßelement relativ zum zu vermessenden Hohlkörper.

Eine vorteilhafte Ausgestaltung der Erfindung sieht vor, daß die beiden, vorzugsweise aus elektrisch isolierendem Kunststoff im Spritzguß hergestellten, Gehäuseteile bezüglich des Meßelements im wesentlichen symmetrisch zueinander ausgeführt sind und Ausnehmungen zur formschlüssigen Aufnahme des Stützelements, des Meßelements und der Schutzfolie aufweisen. Dadurch ergeben sich Einsparungen bei den Spritzgußwerkzeugen und vor allem eine meßtechnische günstige, auf der weitgehend radialsymmetrisch erfolgenden Meßsignalerfassung beruhende Störsignalkompensation. Außerdem wird dadurch der Zusammenbau wesentlich erleichtert, daß die Teile nicht mühsam positioniert werden müssen, sondern von den dafür vorgesehenen Elementen der Gehäuseteile geführt, auf einfache Art in die richtige Lage gebracht und dort gehalten werden können.

Durch die weitere erfindungsgemäße Ausgestaltung, daß nämlich Stützelement und Meßelement in dem Gehäuseteil nur eingelegt und geklemmt, nicht aber geklebt oder verschweißt sind, ergeben sich weitere Vorteile bei den Fertigungskosten.

Besonders hervorzuheben ist eine weitere mögliche erfindungsgemäße Maßnahme, gemäß welcher die Schutzfolie jedes Meßelements aus Kunststoff besteht, mit dem Gehäuse dicht verbunden ist und so mit dem Gehäuse eine dichte Kapsel für das Meßelement bildet.

Das Meßelement ist damit nicht mehr den Einflüssen gefährlicher Gase und Flüssigkeiten ausgesetzt, die eine zerstörerische Wirkung auf die sensitiven Zonen, die Ladungsableitung und insbesondere auch die elektrische Isolation haben können.

In weiterer Ausgestaltung der Erfindung ist vorgesehen, daß die Schutzfolie mit dem Gehäuse durch eine formschlüssige Nut-Feder-Verbindung verbunden ist. Dadurch wird ein einfaches Einlegen und Einpressen ermöglicht, das auch ohne weitergehende Verbindungstechnik eine relativ hohe Dichtheit und Festigkeit gewährleisten kann.

Eine erfindungsgemäße Verbesserung stellt die Verklebung der Schutzfolie mit dem Gehäuseteil dar, wobei zu beachten ist, daß nicht alle Materialkombiantionen gleich gut klebbar sind. Bei den bekannten Sensoren mußte die metallische Schutzfolie mit dem Stützelement aus Gummi und dieses mit dem Kunststoffteil verklebt werden. Daß solche aufwendigen und heiklen Klebeverbindungen im vorliegenden Fall beispielsweise durch eine Klebung von Kunststoff mit Kunststoff ersetzt werden können, stellt eine deutliche Verbesserung und Verbilligung dar.

Eine bevorzugte Ausgestaltung der Erfindung soll nun anhand der Figuren beschrieben werden.

Fig. 1 zeigt eine Seitenansicht eines Ausführungsbeispiels eines erfindungsgemäßen Sensors mit Stecker und Kabelanschluß in geöffneter Stellung (a) und in geschlossener Stellung (b).

Fig. 2 zeigt verschiedene Ansichten (a bis e) der Steckverbindung und des Gelenks eines Sensors gemäß Fig. 1.

Fig. 3 zeigt verschiedene Ansichten (a bis e) des inneren Aufbaus eines Gehäuseteils eines Sensors gemäß Fig. 2.

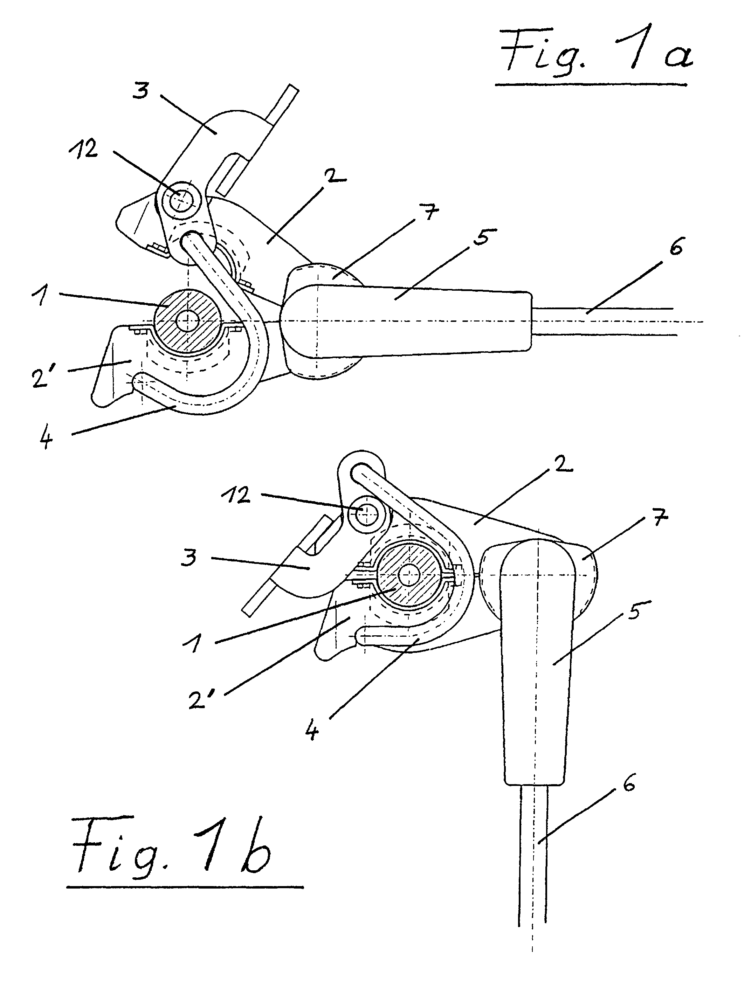

Fig. 1 zeigt deutlich die Einspritzleitung 1, den am Gehäuseteil 2 gelenkig angebrachten Spannhebel 3 und die am zweiten Gehäuseteil 2' gelenkig angebrachte Spannfeder 4, wobei die Spannvorrichtung 3, 4 in beiden gezeigten Stellungen (Fig. 1 a und b) sich im wesentlichen auf der selben Seite des Rohres 1 befindet und die beiden Gehäuseteile 2, 2' gelenkig verbindet. Der als Winkelstecker ausgeführte Stecker mit dem Kabelanschluß 5 für das Kabel 6 und mit der Arretierplatte 7 ist in das gleichzeitig als Buchse fungierende Gelenk eingesteckt.

Man kann sich vorstellen, daß in der offenen Stellung (Fig. 1a) der Stecker mit der Arretierplatte 7 durch die Spannfeder 4 verriegelt wäre, wenn der Stecker in die in Fig. 1b gezeigten Position gedreht wäre. In der geschlossenen Stellung (Fig. 1b) hält der Stecker vor allem durch die auf ihn ausgeübten Klemmkräfte. Man erkennt auch den gleichsinnigen Drehsinn für den Gehäuseteil 2 und den Spannhebel 3 beim Öffnen und Schließen. Davon abweichend könnte die Arretierplatte 7 aber auch so ausgebildet sein, daß der Stecker nur im geschlossenen Zustand des Spannhebels 3 und in einer bestimmten Drehstellung abgezogen werden kann.

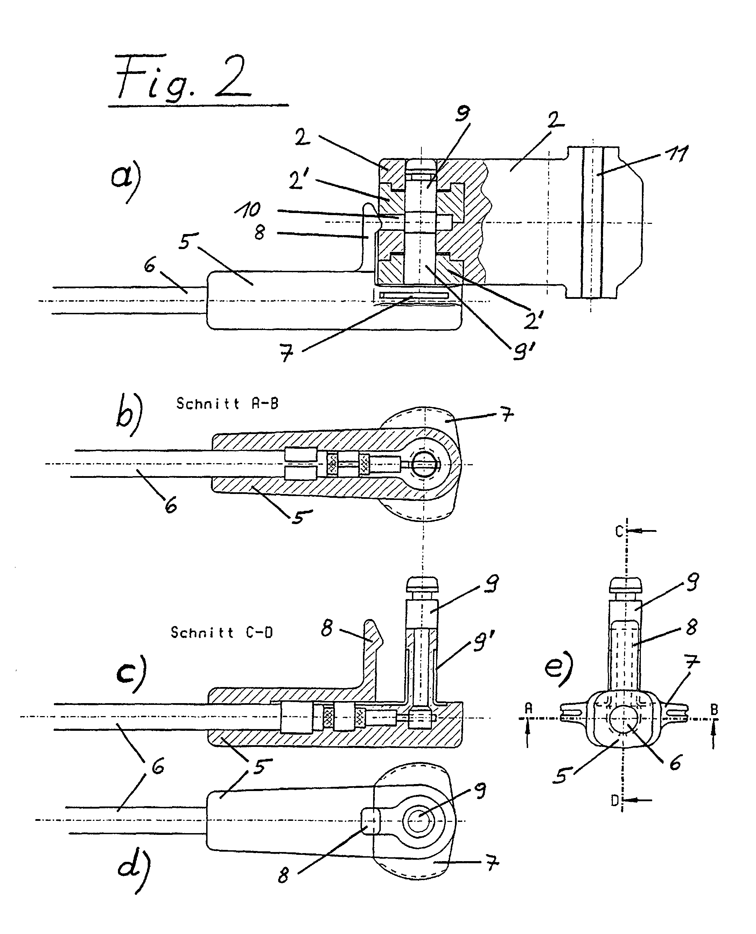

Fig. 2a zeigt den Stecker mit der im Luftspalt 10 einrastenden Schnapparretierung 8 und den als Steckachse für die beiden im Gelenk gefügten Gehäuseteile 2, 2' dienenden Klinkensteckerstift mit den beiden voneinander isolierten Kontaktzonen 9 und 9'. Man sieht weiters die beiden durch den Luftspalt 10 voneinander getrennten Teilgelenke. Die in den beiden Teilgelenken gezeigten zylindrischen Vorsprünge und Vertiefungen bilden ein Hilfsgelenk und die in der Mitte des Luftspalts 10 erkennbare Führungskante an den beiden Gehäuseteilen 2, 2' dient der achsialen Positionierung, bzw. zum Aufrechterhalten des Luftspalts 10. Weiters ist gut sichtbar eine Nut 11 im Gehäuseteil 2, in die die Gelenksachse 12 des Spannhebels 3 eingeklipst wird. Entsprechend befindet sich eine Nut 11' im Gehäuseteil 2', in die der als Gelenksachse 12' dienende Teil der Spannfeder 4 eingeklipst wird, was aber hier nicht dargestellt ist. Ebenfalls hier nicht dargestellt sind die im Gelenk enthaltenen metallischen Kontaktflächen, die als Buchse für den Klinkenstecker dienen.

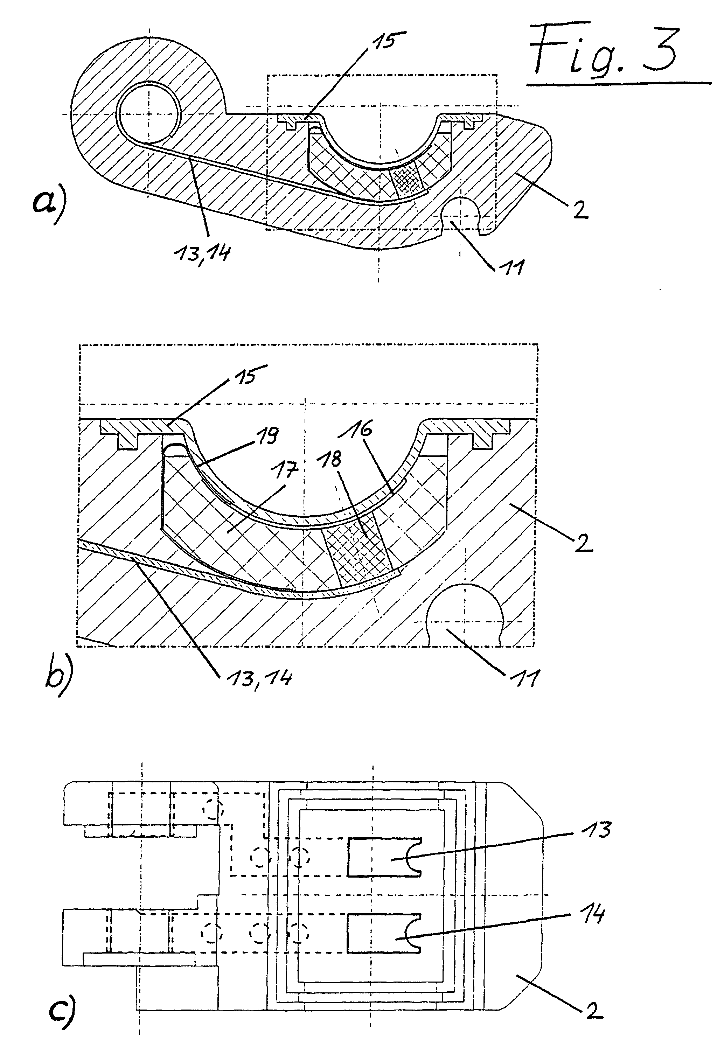

In Fig. 3 sind jedoch diese in die Gehäuseteile 2, 2' integrierten Metallteile 13 und 14 deutlich erkennbar. Geschützt durch die Schutzfolie 15 (die hier zusammen mit umlaufenden Federelementen als Kunststoff-Spritzgußteil ausgeführt ist) befindet sich das Meßelement 16 in Kontakt mit dem elastischen Stützelement 17. Ein elektrisch leitfähiges Elastomer 18 sowie eine dünne Metallfolie 19 leiten das elektrische Signal vom Meßelement zu den Kontaktzonen der beiden Metallteile 13 und 14, die das Signal polrichtig zu den in den Teilgelenken enthaltenen Kontaktflächen der Buchse für den Klinkenstecker leiten.

Die Schutzfolie 15 weist eine Dicke auf, welche größer oder zumindest gleich der Abmessung von zu erwartenden Fremdkörpern, Verunreinigungen, Riefen, Graten, oder dergleichen auf der Oberfläche des zu messenden Hohlkörpers in dessen radialer Richtung ist, sodaß derartige Verunreinigungen und dergleichen ohne die Gefahr einer Verletzung des Meßelementes 16 in die aus relativ weichem Kunststoff (mit geringem E-Modul) bestehende Schutzfolie quasi eingebettet werden können. Bewährt haben sich beispielsweise für gängige Einspritzleitungen von Dieselbrennkraftmaschinen mit Außendurchmessern im Bereich von 4 bis 6 mm Schutzfolien aus Polyamid mit einer Foliendicke im Bereich von etwa 0,2 bis 0,3 mm und einem E-Modul im Bereich von etwa 4000 N/mm². Derartige Folien sind einfach in der Herstellung bzw. Beschaffung und decken normale Anwendungsbereiche bezüglich Ihrer Schutzwirkung und ausreichenden Übertragung der eigentlich zu messenden Oberflächendehnungen ausgezeichnet ab.

Bei der dargestellten und besprochenen Ausführungsform sind die beiden Gehäuseteile, 2, 2' bezüglich des bzw. der Meßelemente 16 zueinander im wesentlichen symmetrisch ausgeführt und weisen Ausnehmungen zur formschlüssigen Aufnahme von Stützelement 17, Meßelement 16 und Schutzfolie 15 auf. Stützelement 17 und Meßelement 16 sind hier in den jeweiligen Gehäuseteil 2, 2' nur eingelegt und geklemmt, nicht aber geklebt oder verschweißt. Die Schutzfolie 15 jedes Meßelementes ist mit dem Gehäuse 2, 2' dadurch dicht verbunden, daß sie in eine formschlüssige Nut-Feder-Verbindung eingesetzt bzw. eingedrückt ist, womit zusammen mit dem Gehäuse eine dichte Kapsel für das Meßelement gebildet wird. Davon abgesehen könnte aber die Schutzfolie das Meßelement bis auf dessen herausgeführte elektrische Kontaktierungen allseits in Form einer geschlossenen Kapsel dicht umgeben, welche Kapsel zusätzlich auch das Stützelement enthalten könnte, womit ein robuster Sensor mit einfach auszutauschenden Elementen realisiert wird.

## Patentansprüche

1. Sensor zur bereichsweisen Erfassung der Dehnung der äußeren Oberfläche eines Hohlkörpers (1), insbesonders zur Messung des Innendruckes von Einspritzleitungen von Dieselbrennkraftmaschinen, mit zumindest einem mittels eines im wesentlichen radial wirkenden Stützelementes (17) im wesentlichen gleichmäßig elastisch an die Oberfläche des zu messenden Hohlkörpers (1) anpreßbaren elektrischen Messelement (16) und einer für die reibschlüssige Verbindung zwischen Oberfläche und Messelement (16) angeordneten Schutzfolie (15), **dadurch gekennzeichnet, dass** die Schutzfolie (15) eine Dicke größer/gleich der radialen Abmessung von zu erwartenden Fremdkörpern, Verunreinigungen oder dergleichen auf der Oberfläche des zu messenden Hohlkörpers (1) aufweist und aus Kunststoff mit geringem E-Modul besteht.

2. Sensor nach Anspruch 1, **dadurch gekennzeichnet, daß** die Schutzfolie (15) eine Dicke von bis zu 10 % des Hohlkörperdurchmessers aufweist.

3. Sensor nach Anspruch 1 oder 2, zur Messung an Einspritzleitungen mit Außendurchmessern im Bereich von 4 bis 6 mm, **dadurch gekennzeichnet, daß** die Schutzfolie (15) aus Polyamid mit einer Foliendicke im Bereich von etwa 0,2 bis 0,3 mm und einem E-Modul im Bereich von etwa 4000 N/mm² besteht.

4. Sensor nach einem oder mehreren der Ansprüche 1 bis 3, **dadurch gekennzeichnet, daß** die Schutzfolie (15) das Meßelement (16) bis auf dessen herausgeführte elektrische Kontaktierungen allseits in Form einer geschlossenen Kapsel dicht umgibt.

5. Sensor nach Anspruch 4, **dadurch gekennzeichnet, daß** zusätzlich auch das Stützelement (17) innerhalb der Schutzfolien-Kapsel angeordnet ist.

6. Sensor nach einem oder mehreren der Ansprüche 1 bis 5, mit zwei gelenkig verbundenen und zusammen auf den Hohlkörper (1) aufklemmbaren Gehäuseteilen (2, 2'), welche zumindest je ein Meßelement (16) enthalten, **dadurch gekennzeichnet, daß** die beiden Gehäuseteile (2, 2') bezüglich des Meßelementes (16) zueinander im wesentlichen symmetrisch ausgeführt sind und Ausnehmungen zur formschlüssigen Aufnahme des Stützelements (17), des Meßelements (16) und der Schutzfolie (15) aufweisen.

7. Sensor nach Anspruch 6, **dadurch gekennzeichnet, daß** die beiden Gehäuseteile (2, 2') aus elektrisch isolierendem Kunststoff im Spritzguß hergestellt sind.

8. Sensor nach Anspruch 6 oder 7, **dadurch gekennzeichnet, daß** Stützelement (17) und Meßelement (16) in den Gehäuseteil (2, 2') nur eingelegt und geklemmt, nicht aber geklebt oder verschweißt, sind.

9. Sensor nach einem oder mehreren der Ansprüche 6 bis 8, **dadurch gekennzeichnet, daß** die Schutzfolie (15) jedes Meßelements (16) mit dem Gehäuse (2, 2') dicht verbunden ist und mit dem Gehäuse (2, 2') eine dichte Kapsel für das Meßelement (15) bildet.

10. Sensor nach Anspruch 9, **dadurch gekennzeichnet, daß** die Schutzfolie (15) mit dem Gehäuse (2, 2') durch eine formschlüssige Nut-Feder-Verbindung verbunden ist.

11. Sensor nach Anspruch 8 oder 9, **dadurch gekennzeichnet, daß** die Schutzfolie (15) mit dem Gehäuse (2, 2') verklebt ist.

12. Sensor nach Anspruch 8 oder 9, **dadurch gekennzeichnet, daß** die Schutzfolie (15) mit dem Gehäuse (2, 2') durch Ultraschallschweißen verbunden ist.

## Claims

1. Sensor for regional registration of the surface strain of the outer surface of a hollow body (1), especially for measuring the internal pressure of injection lines of diesel combustion engines, with at least one electrical measuring element (16) capable of being pressed by means of a substantially radially acting supporting element (17) in a substantially uniformly resilient manner onto the surface of the hollow body (1) to be measured and a protective film (15) arranged to allow a friction-locking connection between the surface and the measuring element (16),
**characterised in that** the protective film (15) provides a thickness greater than/equal to the radial dimensions of anticipated particles of. foreign matter, contamination or similar on the surface of the hollow body (1) to be measured and consists of a synthetic material with a low elastic modulus.

2. Sensor according to claim 1, **characterised in that** the protective film (15) provides a thickness of up to 10% of the diameter of the hollow body.

3. Sensor according to claim 1 or 2, for measuring on injection lines with external diameters in the region from 4 to 6 mm, **characterised in that** the protective film (15) consists of polyamide with a film thickness within the range of approximately 0.2 to 0.3 mm and an elastic modulus within the range of approximately 4000 N/mm².

4. Sensor according to one or more of claims 1 to 3, **characterised in that** the protective film (15) tightly encloses the measuring element (16) all-round, apart from its free electrical contacts, in the form of a sealed capsule.

5. Sensor according to claim 4, **characterised in that,** additionally, the supporting element (17) is arranged within the protective-film capsule.

6. Sensor according to one or more of claims 1 to 5 with two housing components (2, 2') connected in an articulated manner and capable of being clamped together onto the hollow body (1), which contain at least one measuring element (16) each,
**characterised in that** the two housing components (2, 2') are designed in a substantially mutually symmetrical manner relative to the measuring element (16) and provide recesses for the form-fit accommodation of the supporting element (17), the measuring element (16) and the protective film (15).

7. Sensor according to claim 6, **characterised in that** the two housing components (2, 2') are manufactured by injection moulding from electrically insulating synthetic material.

8. Sensor according to claim 6 or 7, **characterised in that** the supporting element (17) and the measuring element (16) are only positioned and clamped into the housing component (2, 2') but not glued or welded.

9. Sensor according to one or more of claims 6 to 8, **characterised in that** the protective film (15) of each measuring element (16) is connected tightly to the housing (2, 2') and with the housing (2, 2') forms a tightly sealed capsule for the measuring element (15).

10. Sensor according to claim 9, **characterised in that** the protective film (15) is connected to the housing (2, 2') by a form-fit tongue and groove connection.

11. Sensor according to claim 8 or 9, **characterised in that** the protective film (15) is glued to the housing (2, 2').

12. Sensor according to claim 8 or 9, **characterised in that** the protective film (15) is connected to the housing (2, 2') by ultrasonic welding.

## Revendications

1. Capteur pour la détection par zones de la dilatation de la surface extérieure d'un corps creux (1), en particulier pour la mesure de la pression intérieure de conduites d'injection dans des moteurs à combustion internes diesel, avec au moins un élément de mesure (16) électrique susceptible d'être pressé pratiquement régulièrement, élastiquement, sur la surface du corps creux (1) à mesurer, au moyen d'un élément d'appui (17) à effet sensiblement radial et d'une feuille protectrice (15) disposée pour établir la liaison par friction entre la surface et l'élément de mesure (16), **caractérisé en ce que** la feuille protectrice (15) présente une épaisseur supérieure/identique aux dimensions radiales de corps étrangers, d'impuretés ou analogues, risquant d'être présents, sur la surface du corps creux (1) à mesurer et est formée d'une matière synthétique à faible module (E).

2. Capteur selon la revendication 1, **caractérisé en ce que** la feuille protectrice (15) présente une épaisseur allant jusqu'à 10 % du diamètre du corps creux.

3. Capteur selon la revendication 1 ou 2, pour la mesure sur des conduites d'injection, ayant des diamètres extérieurs dans la plage de 4 à 6 mm, **caractérisé en ce que** la feuille protectrice (15) est en polyamide, ayant une épaisseur de feuille dans la plage d'environ 0,2 à 0,3 mm et un module E dans la plage d'environ 4000 N/mm².

4. Capteur selon l'une ou plusieurs des revendications 1 à 3, **caractérisé en ce que** la feuille protectrice (15) entoure l'élément de mesure (16), jusqu'à ce que ses contacts électriques soient ressortis, de toutes parts, de façon étanche sous la forme d'une capsule fermée.

5. Capteur selon la revendication 4, **caractérisé en ce qu'**à l'intérieur de la capsule de feuille protectrice est en plus également disposé l'élément d'appui (17).

6. Capteur selon l'une ou plusieurs des revendications 1 à 5, comportant deux parties de boîtier (2, 2') reliées de façon articulée et susceptibles d'être rapportées par serrage, en étant assemblées sur le corps creux (1), parties de boîtier contenant au moins chacune un élément de mesure (16), **caractérisé en ce que** les deux parties de boîtier (2, 2') sont pratiquement symétriques l'une à l'autre par rapport à l'élément de mesure (16) et présentent des évidements pour loger par une liaison à ajustement de forme l'élément d'appui (17), l'élément de mesure (16) et la feuille protectrice (15).

7. Capteur selon la revendication 6, **caractérisé en ce que** les deux parties de boîtier (2, 2') sont fabriquées par un procédé de moulage par injection, en une matière synthétique isolante de l'électricité.

8. Capteur selon la revendication 6 ou 7, **caractérisé en ce que** l'élément d'appui (17) et l'élément de mesure (16) ne sont qu'insérés dans la partie de boîtier (2, 2') et serrés, mais ne sont ni collés ni soudés.

9. Capteur selon l'une ou plusieurs des revendications 6 à 8, **caractérisé en ce que** la feuille protectrice (15) de chaque élément de mesure (16) est reliée de façon étanche au boîtier (2, 2') et forme avec le boîtier (2, 2') une capsule étanche pour l'élément de mesure (15).

10. Capteur selon la revendication 9, **caractérisé en ce que** la feuille protectrice (15) est reliée au boîtier (2, 2') par une liaison à ajustement de forme de type à languette-rainure.

11. Capteur selon la revendication 8, **caractérisé en ce que** la feuille protectrice (15) est collée au boîtier (2, 2').

12. Capteur selon la revendication 8 ou 9, **caractérisé en ce que** la feuille protectrice (15) est reliée au boîtier (2, 2') par un soudage aux ultrasons.
